Europäisches Patentamt

(19) European Patent Office

Office européen des brevets

(11) Numéro de publication: **0 245 185**
**B1**

(12) **FASCICULE DE BREVET EUROPEEN**

(45) Date de publication du fascicule du brevet: **22.11.90**

(51) Int. Cl.⁵: **A 23 L 1/318**, A 23 B 4/044, A 23 L 1/314

(21) Numéro de dépôt: **87440021.1**

(22) Date de dépôt: **15.04.87**

(54) Composition alimentaire à base de viande de mouton.

(30) Priorité: **25.04.86 FR 8606155**

(43) Date de publication de la demande:
**11.11.87 Bulletin 87/46**

(45) Mention de la délivrance du brevet:
**22.11.90 Bulletin 90/47**

(84) Etats contractants désignés:
**AT BE CH DE ES GB GR IT LI LU NL SE**

(73) Titulaire: **Lequette, Louis**
**Motel les Blancs**
**F-04400 Pra Loup Barcelonette (FR)**

(72) Inventeur: **Lequette, Louis**
**Motel les Blancs**
**F-04400 Pra Loup Barcelonette (FR)**

(74) Mandataire: **Arbousse-Bastide, Jean-Claude**
**Philippe**
**CABINET ARBOUSSE BASTIDE 20, rue de**
**Copenhague**
**F-67000 Strasbourg (FR)**

(56) Documents cités:
FR-A-1 327 844
FR-A-2 157 257
GB-A-1 354 963

R.J. COURTINE: "Nouveau Larousse Gastronomique", 3ième édition, 1967, pages 652,653,686,690,691,693, Librairie Larousse, Paris, FR

A.M. PEARSON et al.: "Processed Meats", 2ième édition, 1984, page 287, Avi Publishing Co., Inc., Westport, Connecticut, US

(56) Documents cités:
CHEMICAL ABSTRACTS, vol. 93, no. 21, 1980, page 543, résumé no. 202927p, Columbus, Ohio, US; & JP-A-80 26 811 (FUJI OIL CO., LTD) 16-07-1980

Courier Press, Leamington Spa, England.

EP 0 245 185 B1

# Description

La présente invention concerne un nouveau produit alimentaire à base de viande de mouton, ainsi que les moyens pour sa préparation.

Il est bien connu que la viande de mouton présente l'inconvénient de posséder un goût relativement fort, qui la fait écarter par beaucoup de consommateurs, au profit, au mieux de la viande d'agneau, nettement plus coûteuse. Les éleveurs de moutons souhaitaient donc depuis longtemps trouver de nouveaux débouchés à leurs produits, convenant à une consommation moins restreinte.

L'invention repose sur la découverte que par un traitement simple, il est possible de masquer la composante suiffée du goût de la viande de mouton, par des moyens naturels n'affectant pas les qualités naturelles de cette viande.

Un premier moyen que l'on pouvait envisager aurait pu consister à soumettre la viande à un traitement de fumage. En effet, jusqu'à présent, seule la viande de porc a bénéficié d'un tel traitement, et celà à très grande échelle. Toutefois, on a constaté que le simple fumage de la viande de mouton conduisait encore à une viande au goût trop fort.

Il est donc apparu qu'un traitement plus complexe s'imposait, et c'est ce traitement qui fait l'objet de l'invention.

Le procédé selon l'invention comprend, dans une première étape, dont la durée peut être de 1 à 4 jours, une imprégnation de la viande, éventuellement préalablement hachée, par des herbes dites "de provence".

La viande ainsi imprégnée est ensuite soumise, dans une seconde étape, à une macération dans de l'huile d'olive pendant une durée de l'ordre de 1 jour.

Enfin, une troisième étape fait intervenir un fumage du produit pendant une période relativement courte, de l'ordre de 2 à 3 heures.

L'imprégnation de la viande par des herbes de Provence peut s'effectuer soit à sec soit par macération de la viande dans une décoction desdites herbes, salée au sel nitrité. Les herbes de Provence mises en oeuvre sont préférentiellement un mélange de romarin, de thym, de marjolaine et de sariette.

Le produit obtenu à l'issue de ces trois étapes peut être consommé cru ou cuit, sous forme de morceaux ou de steacks reconstitués.

Selon une variante, ce produit peut au surplus être soumis à une étape supplémentaire de séchage, et être consommé à l'état cru, sous forme par exemple de lamelles comme la viande dite des Grisons.

Ce procédé s'applique préférentiellement à la viande de mouton, comme il a été indiqué au début, mais pour des raisons économiques, gustatives et d'équilibre entre matières grasses et carnées, on peut remplacer jusqu'à 50% de cette viande de mouton par de la viande de boeuf. On obtient ainsi un produit qui peut être mis sous forme de saucisse ou de steacks, commercialisé sous vide ou en surgelé, et que l'on peut consommer après cuisson.

Le procédé selon l'invention, sous ses diverses variantes, conduit donc à des produits attractifs pour une large clientèle de consommateurs.

## Revendications

1. Procédé pour la fabrication d'un produit alimentaire à base de viande de mouton, en vue de masquer le goût "suiffé" de ladite viande, ce procédé se caractérisant en ce qu'il comprend les trois étapes successives ci-après:

dans une première étape, une imprégnation de la viande, éventuellement préalablement hachée, par des herbes dites "de Provence" pendant une durée de l'ordre de 1 à 4 jours.

dans une seconde étape, une macération dans l'huile d'olive, pendant une durée de l'ordre de 1 jour.

dans une troisième étape, un fumage sur une période relativement courte, de l'ordre de 2 à 3 heures.

2. Procédé selon la revendication 1, caractérisé en ce que lesdites herbes de Provence se composent d'un mélange de romarin, de thym, de marjolaine et de sariette.

3. Procédé selon la revendication 1 ou la revendication 2, caractérisé en ce que l'imprégnation de la viande par des herbes de Provence s'effectue à l'aide d'un mélange sec desdites herbes.

4. Procédé selon la revendication 1 ou la revendication 2, caractérisé en ce que l'imprégnation de la viande par des herbes de Provence s'effectue à l'aide d'une décoction desdites herbes, salée au sel nitrité.

5. Produit alimentaire à base de viande de mouton, susceptible d'être obtenu par le procédé qui fait l'objet des revendications 1 à 4.

6. Produit alimentaire selon la revendication 5, caractérisé en ce qu'il est livré cru au consommateur.

7. Produit alimentaire selon la revendication 5, caractérisé en ce qu'il est livré séche au consommateur.

8. Produit alimentaire selon l'une quelconque des revendications 5 à 7, caractérisé en ce que la viande de mouton est substituée jusqu'à 50% par de la viande de boeuf.

## Patentansprüche

1. Verfahren zur Herstellung eines neuen Nahrungsmittels auf der Basis von Hammelfleisch, um den "talgigen" Geschmack des genannten Fleisches zu überdecken, dadurch gekennzeichnet, daß das Verfahren die nachfolgenden drei aufeinanderfolgenden Schritte beinhaltet:

im ersten Schritt eine Durchdringung des evtl. vorher gehackten Fleisches mit Kräutern, genannt "der Provence", während einer Zeitdauer in der Größenordnung von 1 bis 4 Tagen.

im zweiten Schritt ein Einlegen in Olivenöl während einer Zeitdauer in der Größenordnung von 1 Tag.

im dritten Schritt ein Räuchern über eine relativ kurze Zeitdauer hinweg in der Größenordnung von 2 bis 3 Stunden.

2. Verfahren nach Anspruch 1, dadurch gekennzeichnet, daß die genannten Kräuter der Provence sich zusammensetzen aus einer Mischung aus Rosmarin, Thymian, Majoran und Pfefferkraut.

3. Verfahren nach Anspruch 1 oder 2, dadurch gekennzeichnet, daß die Durchdringung des Fleisches mit den Kräutern der Provence sich mit Hilfe einer getrockneten Mischung der genannten Kräuter vollzieht.

4. Verfahren nach Anspruch 1 oder 2, dadurch gekennzeichnet, daß die Durchdringung des Fleisches mit den Kräutern der Provence sich mit Hilfe eines Suds der genannten Kräuter, gesalzen mit Nitritsalz, vollzieht.

5. Nahrungsmittel auf der Basis von Hammelfleisch, hergestellt mittels des Verfahrens, das Gegenstand der Ansprüche 1 bis 4 ist.

6. Nahrungsmittel nach Anspruch 5, dadurch gekennzeichnet, daß es roh an den Verbraucher geliefert wird.

7. Nahrungsmittel nach Anspruch 5, dadurch gekennzeichnet, daß es getrocknet an den Verbraucher geliefert wird.

8. Nahrungsmittel nach einem der Ansprüche 5 bis 7, dadurch gekennzeichnet, daß das Hammelfleisch bis zu 50% durch Rindfleisch ersetzt wird.

**Claims**

1. Process for the manufacture of a food product having a mutton base, with a view to disguising the greasy taste of the said meat, characterised by the following successive process stages:

in a first stage an impregnation of the meat, in whole or minced form, by "Provence" herbs for a period of 1 to 4 days;

in a second stage, steeping the meat in olive oil, for a period of the order of 1 day;

in a third stage stage, smoking (curing) the meat for a relatively short period, of the order of 2 to 3 hours.

2. Process according to claim 1, characterised in that the said Provence herbs are composed of a mixture of rosemary, thyme, sweet marjoram and savory.

3. Process according to claim 1 or claim 2, characterised in that the impregnation of the meat by the Provence herbs is accomplished by means of a dry mixture of said herbs.

4. Process according to claim 1 or claim 2, characterised in that the impregnation of the meat by the Provence herbs is accomplished by means of a decoction of the said herbs, seasoned with nitrited salt.

5. Food product with a mutton base, obtained according to the process as claimed in any one of claims 1 to 4.

6. Food product according to claim 5, characterised in that that it is delivered uncooked to the consumer.

7. Food product according to claim 5, characterised in that it is delivered dried to the consumer.

8. Food product according to any one of claims 5 to 7, characterised in that the mutton is substituted with up to 50% of beef.